# EUROPEAN PATENT APPLICATION

(11) **EP 1 892 036 A1**
(43) Date of publication of application: **27.02.2008**
(21) Application number: 06017358.0
(22) Date of filing: 21.08.2006
(51) Int. Cl.: B01J 8/02

(54) **Isothermal reactor**

(71) Applicant: METHANOL CASALE S.A., 6900 Lugano-Besso (CH)
(72) Inventor: Clayton, Keith A., Strathmore, Alberta T1P 1J6 (CA); Comandini, Ettore, 0019 Tivoli-Villa Adriana (IT)
(74) Representative: Zardi, Marco

(57) **Abstract**

The present invention relates to an isothermal reactor (1) comprising a substantially cylindrical shell (2), at least one catalytic bed (10) supported in said shell (2) intended for being crossed by a flow of reacting gases and a thermal exchange unit (13) comprising a plurality of heat exchangers (14) characterized in that it comprises baffle means in at least one reaction zone (36) of said catalytic bed (10) between adjacent heat exchangers (14) for deviating said flow of reacting gases crossing said catalytic bed (10) towards said adjacent heat exchangers (14) .

## Description

### Field of application

In the most general aspect thereof, the present invention relates to a chemical reactor of the type comprising a substantially cylindrical shell (or pressure vessel), closed at the opposite ends by respective bottoms, a reaction zone in said shell wherein at least one catalytic bed (or basket) is located, and a thermal exchange unit embedded in said catalytic bed.

Such a reactor is especially useful to carry out exothermic or endothermic chemical reactions in substantially isothermal conditions, that is to say conditions wherein the reaction temperature is controlled, in a quite limited range of values, about a predetermined value.

In the following description and appended claims, a reactor of the above type is identified with the terms: pseudo-isothermal or, more shortly, isothermal reactor.

More in particular, the present invention relates to an isothermal reactor of the type considered, wherein said thermal exchange unit consists of a plurality of heat exchangers, plate-like, substantially box-shaped, defining a chamber therein intended to be crossed by a thermal exchange operating fluid.

The present invention also relates to a thermal exchange unit for isothermal reactors of the above type.

### Prior art

Isothermal reactors of the type indicated above are widely known in the field. In such reactors, the kinetics of a predetermined chemical reaction, both exothermic and endothermic, is promoted by the fact that the operating fluid, crossing the respective thermal exchange unit, subtracts or yields heat to the reaction environment (catalytic bed) so as to shift the reaction towards a completion thereof.

Therefore, it is of fundamental importance to optimize as much as possible the above thermal exchange between the operating fluid, which flows within the heat exchangers, and the catalytic bed, wherein said exchangers are embedded and wherein the reaction takes place, in order to improve the reaction efficiency.

In isothermal reactors of the known art, this is normally achieved by maximizing the thermal exchange coefficient both inside the heat exchangers where the fluid flows, and inside the catalytic bed.

However, by doing so, it has been noted that even considerable temperature gradients occur in the catalytic bed, especially in the event the latter (and optionally the reacting gases) maintains a relatively low thermal exchange coefficient.

In particular, the temperature in any point of the bed varies between a first value at the heat exchangers, that is, at the temperature of the outer wall of the exchangers themselves, and a second temperature value that is found at the points of the catalytic bed located at the maximum distance from the heat exchangers.

In the following description and appended claims, said second temperature value shall be identified with the term "limit temperature" T₁.

If the reaction that takes place into the reactor is exothermic, said limit temperature T₁ will correspond to a maximum predetermined temperature value Tₘₐₓ, above which it is not convenient to have the reaction take place, since it has reached the equilibrium and/or secondary reactions take place that decrease the yield and, moreover, a decrease of the catalyst efficiency occurs.

If the reaction that takes place inside the reactor is endothermic, said limit temperature T1 will correspond to a temperature value below which the reaction does not take place.

The consequent lack of homogeneity in the temperature distribution causes a departure, inside the catalytic bed, from the desired conditions of pseudo-isothermicity, with worsening of the overall efficiency of the reactor itself.

### Summary of the invention

The technical problem at the basis of the present invention is therefore to provide an isothermal reactor of the type mentioned above wherein it should be possible to achieve an optimum thermal exchange efficiency between the heat exchangers and the catalytic bed even in low conductivity conditions of said catalytic bed and optionally of the reacting gases and of the reaction gaseous products, so as to overcome the disadvantages mentioned hereinabove with reference to the known art.

Such a problem is solved by an isothermal reactor comprising a substantially cylindrical shell, at least one catalytic bed supported in said shell intended for being crossed by a flow of reacting gases and a thermal exchange unit comprising a plurality of heat exchangers characterized in that it comprises baffle means in at least one reaction zone of said catalytic bed between adjacent heat exchangers for deviating said flow of reacting gases crossing said catalytic bed towards said adjacent heat exchangers.
Preferably, the above baffle means consists in a plurality of fins having a plate-like structure and essentially rectangular shape.

Preferably, the above fins are supported by said exchangers at a long side of said fins and extend from said exchangers substantially up to a centre line zone between adjacent heat exchangers.

According to a particularly preferred embodiment of the invention, each exchanger supports, on both the opposite walls thereof, a plurality of fins in predetermined spaced relation to each other and moreover, in each reaction zone defined between adjacent heat exchangers, the fins of an exchanger alternate with the fins of the other adjacent exchanger so as to create a substantially zigzag crossing path along said reaction zone of the catalytic bed for said flow of reacting gases directed towards said adjacent heat exchangers.

According to a further preferred embodiment of the invention, the fins or some of the fins are arranged in the reaction zone defined between adjacent heat exchangers, at a centre line zone.

The adoption of baffle means according to the invention forces the reacting gases that centrally cross the reaction zones between adjacent heat exchangers (that is, in a portion of said reaction zones more far away from said adjacent exchangers) to flow towards the periphery of said reaction zones (that is, in a portion of said reaction zones that is closer to said adjacent exchangers) and vice versa, preferably following a substantially zigzag path, up to optionally touch said exchangers.

In this way, it has been surprisingly found that, in clear contrast with the teachings of the known art, the effect of increasing the catalytic bed conductivity is obtained in a fictitious manner, thus achieving higher temperature homogeneity in the catalytic bed itself and a considerable increase of the thermal exchange efficiency between the heat exchangers and the catalytic bed.

It is therefore possible, even in conditions of especially low effective values of the catalytic bed thermal conductivity, to operate in all the catalytic bed at the desired pseudo-isothermicity conditions, to the advantage of the overall reaction efficiency of the reactor itself.

The present invention also relates to a thermal exchange unit for isothermal reactors of the above type. Such thermal exchange unit comprises a plurality of heat exchangers defining a plurality of reaction zones thereinbetween, intended for being crossed by a flow of reacting gases and is characterized in that it comprises baffle means in at least one reaction zone between said adjacent heat exchangers for deviating said flow of reacting gases towards said adjacent heat exchangers.

Further features and advantages of present invention will appear more clearly from the following description of some embodiments of the reactor according to the invention, made by way of an indicative non-limiting example with reference to the annexed drawings.

### Brief description of the drawings

In the figures:
Figure 1 shows a perspective and partial section view of an isothermal reactor according to an embodiment of the present invention;
Figure 2 shows a perspective enlarged scale view of a detail of the thermal exchange unit of the isothermal reactor of Figure 1;
Figure 3 shows a cross section view of the isothermal reactor of Figure 1;
Figure 4 shows a perspective enlarged scale view of a detail of the thermal exchange unit of an isothermal reactor according to another embodiment of the present invention;
Figure 5 shows a cross section view of the isothermal reactor incorporating the thermal exchange unit of figure 4;
Figure 6 shows a perspective enlarged scale view of a detail of the thermal exchange unit of an isothermal reactor according to an even further embodiment of the present invention;
Figure 7 shows a cross section view of the isothermal reactor incorporating the thermal exchange unit of figure 6;
Figure 8 schematically shows a section view of a detail of an isothermal reactor operating according to the prior art and relevant temperature profile;
Figure 9 schematically shows a section view of a detail of the isothermal reactor of figure 1 and relevant temperature profile.

### Detailed description

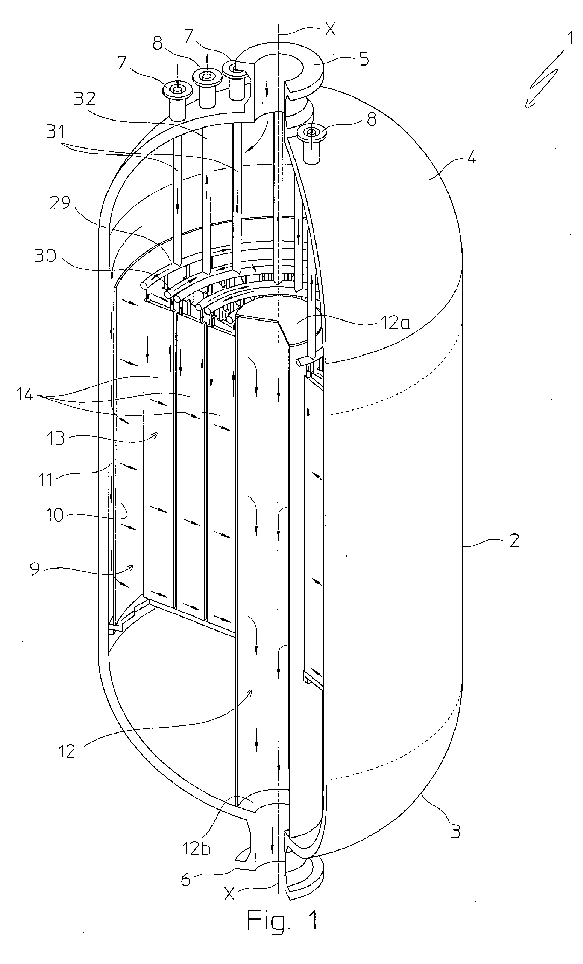

With reference to figure 1, reference numeral 1 globally denotes a pseudo-isothermal catalytic chemical reactor for the synthesis of chemical substances such as for example ammonia, methanol, formaldehyde, nitric acid, according to the present invention.

Said reactor 1 comprises a cylindrical shell 2, with vertical axis X, closed at the opposite ends thereof by respective lower 3 and upper bottoms 4, an inlet 5 of the reacting gases, an outlet 6 of the reaction products, inlets 7 for feeding a thermal exchange operating fluid and outlets 8 for said operating fluid.

A reaction zone or environment 9 is defined within the shell 2, wherein a catalytic bed 10 is supported in a per se known manner, the catalytic bed 10 having substantially cylindrical shape and being coaxial with shell 2 and defining an interspace 11 therewith having small width and a central duct 12, extended at the axis of the shell itself.

The catalytic bed 10 is provided with holes for allowing the passage of the reacting gases with radial motion from said interspace 11 to said reaction zone 9, whereas the central duct 12, gas-permeable as well, has a closed upper end 12a and a lower end 12b open and in direct fluid communication with the outlet 6 of bottom 3.

The catalytic bed 10 is intended for containing a mass of an appropriate catalyst (not shown), wherein a thermal exchange unit, globally indicated with reference numeral 13, is embedded and supported in a per se known manner.

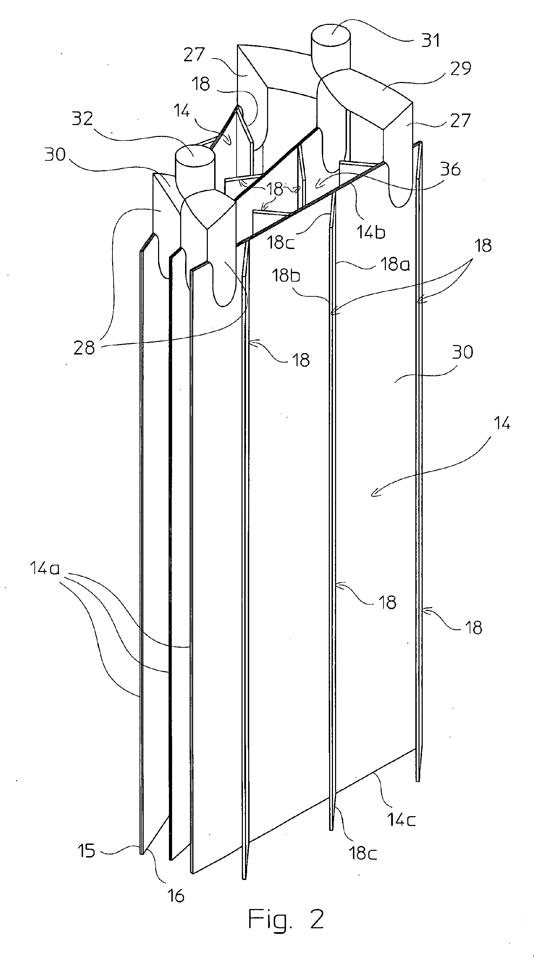

As a whole, said thermal exchange unit 13 has a cylindrical annular shape and comprises a plurality of heat exchangers 14 evenly distributed radially in three coaxial and concentric orders. With reference to figure 2, each exchanger 14 has a substantially box-shaped structure, flat, with substantially rectangular elongated shape. According to the arrangement of figure 1, in the thermal exchange unit 13 all exchangers 14 are arranged with opposite long sides 14a parallel to the axis of the shell 2 and opposite short sides 14b, 14c radially extended relative thereto.

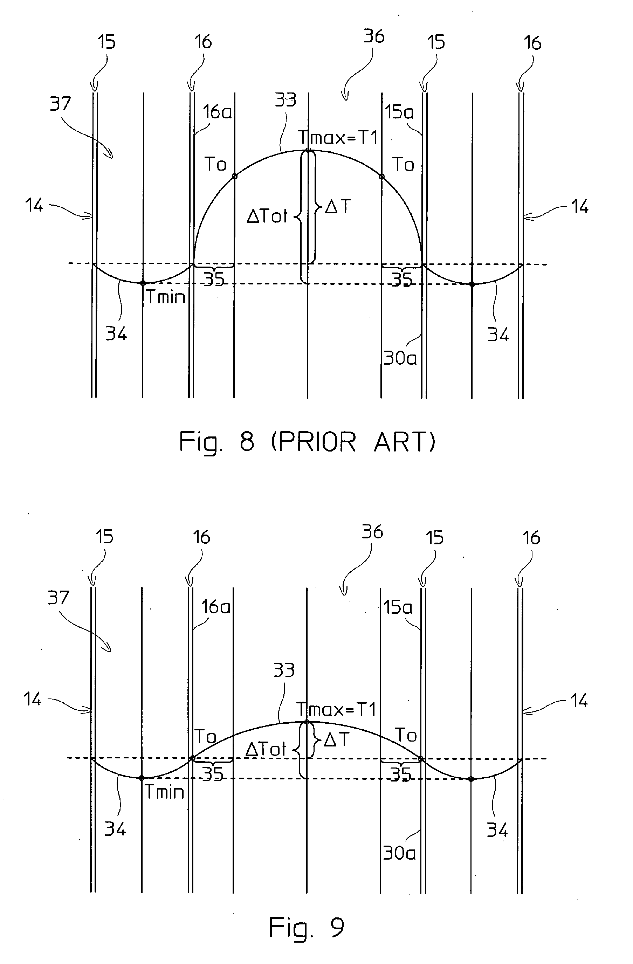

More in particular, each exchanger 14 consists of a pair of metal plates (walls) 15, 16 placed side by side, reciprocally connected, in predetermined spaced relation, through perimetric welds, so that a zone or chamber (indicated with reference numeral 37 in figure 9) is defined thereinbetween, intended for being crossed by a thermal exchange operating fluid.

Moreover, said heat exchangers 14 are provided with an inlet union 27 and an outlet union 28 for a thermal exchange operating fluid which, in the present non-limiting example, are arranged on the same side, in particular the short side 14b, but they can equally be arranged on different sides.

In the present embodiment of the invention, a group of a predetermined number of heat exchangers 14 shares an inlet header duct and an outlet header duct (fig. 2). Preferably but not in a limiting manner, said group of heat exchangers 14 comprises all the exchangers of a same coaxial and concentric order. Said inlet and outlet unions 27 and 28 of heat exchangers 14 are connected at the top with respectively distributor 29 and header 30 annular ducts of the operating fluid, arranged at the upper end of the bed 10 and overlying the cylindrical annular shape of heat exchangers 14.

Each annular distributor duct 29 is connected to a single coaxial order of heat exchangers 14; the same applies for each annular header duct 30.

The above annular ducts 29 and 30, moreover, are in fluid communication with the exterior of the thermal exchange unit 1, through respective feeding duct 31 and discharge duct 32 of said fluid, which are in turn respectively connected to one of the inlets 7 and to one of the outlets 8 of said thermal exchange operating fluids.

In accordance with the present invention, the isothermal reactor 1 comprises baffle means in zones 36 between adjacent heat exchangers 14 for deviating the flow of reacting gases crossing the catalytic bed 10 towards said adjacent exchangers 14.

Preferably, said baffle means comprises a plurality of fins 18 having a plate-like structure and essentially rectangular shape and having opposite long sides 18a and 18b and opposite short sides 18c.

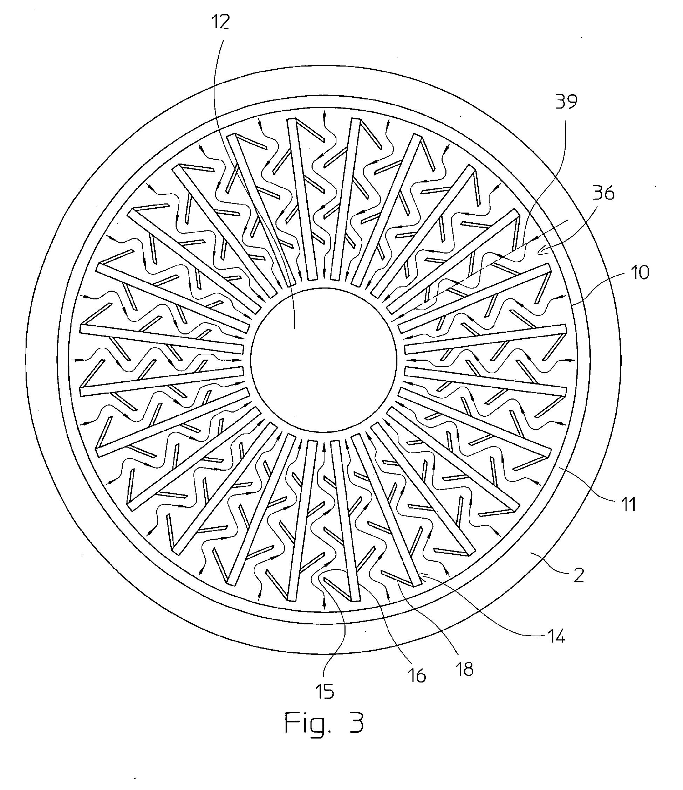

More in particular, according to a first embodiment of the invention shown in figures 2-5, said fins 18 are preferably supported by said exchangers 14 at a long side of fins 18 (for example the long side 18a) and extend from respective exchangers 14 substantially up to a centre line zone 39 between adjacent exchangers 14.

Said support is achieved for example by fixing - in a per se conventional manner - the opposite ends of a long side 18a of a fin 18 to the short sides 14b, 14c of the respective heat exchanger 14.

Preferably, fins 18 have the respective opposite long sides 18a, 18b parallel to the axis of shell 2 and extend substantially along the entire axial length of the respective heat exchangers 14.

Still more in particular, each exchanger 14 supports on both opposite walls 15, 16 thereof a plurality of fins 18 in predetermined spaced relation between them and moreover, in each reaction zone 36 defined between two adjacent heat exchangers 14, the fins 18 of an exchanger 14 alternate with the fins of the other exchanger 14 so as to create along each reaction zone 36 defined by said adjacent exchangers 14 a substantially zigzag crossing path of catalytic bed 10 by the flow of reacting gases directed towards said adjacent heat exchangers 14.

According to the example of figures 2-3, fins 18 are advantageously arranged inclined relative to walls 15, 16 of the respective heat exchangers 14.

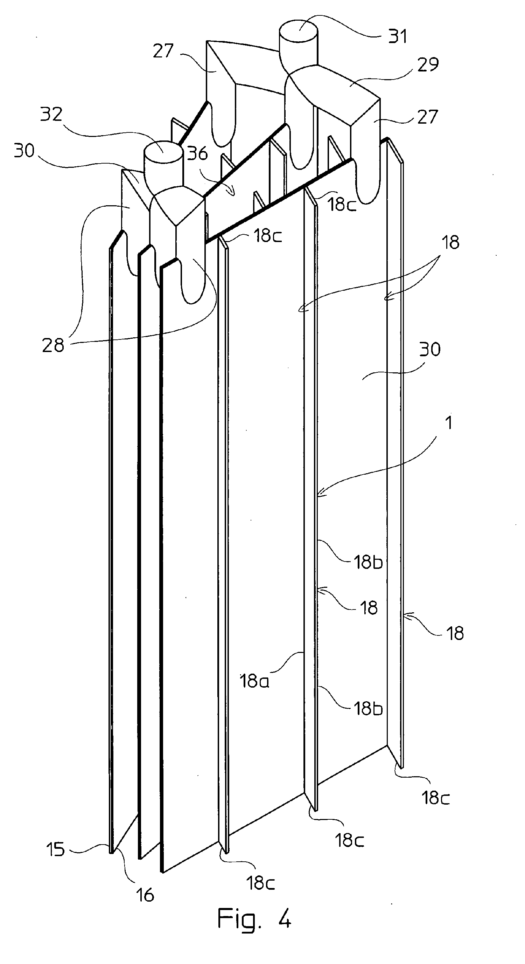

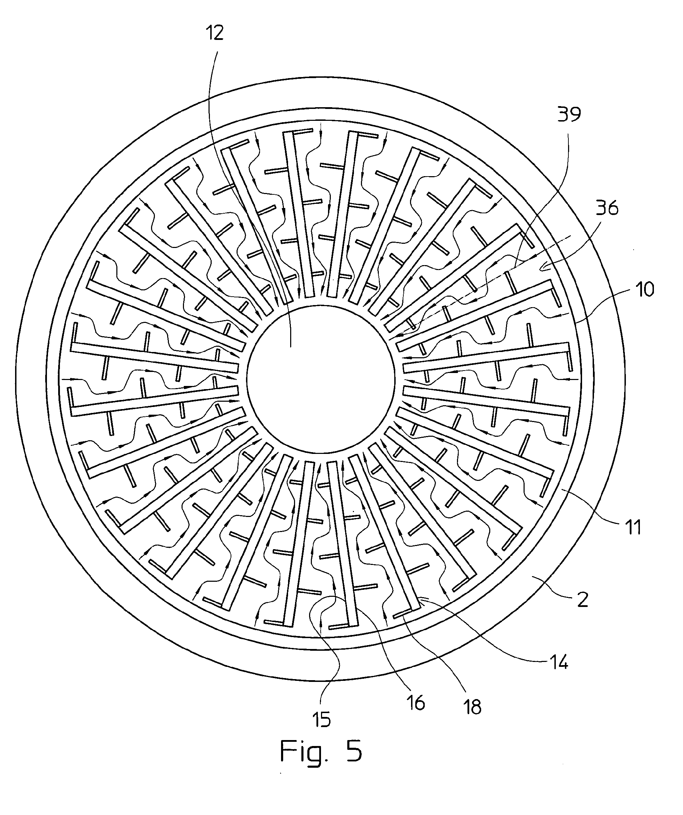

According to the example of figures 4 and 5, on the contrary, fins 18 are arranged substantially perpendicular to walls 15, 16 of the respective heat exchangers 14.

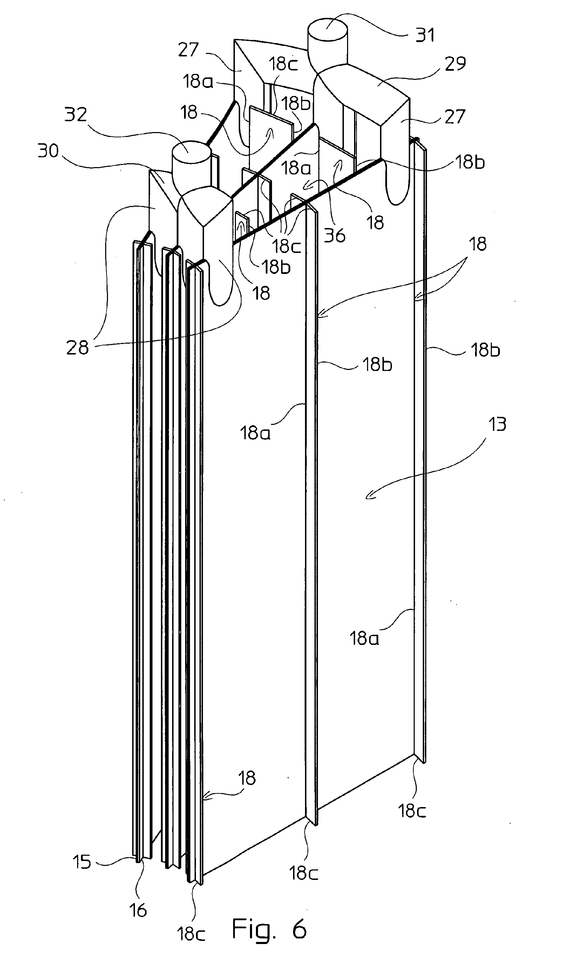

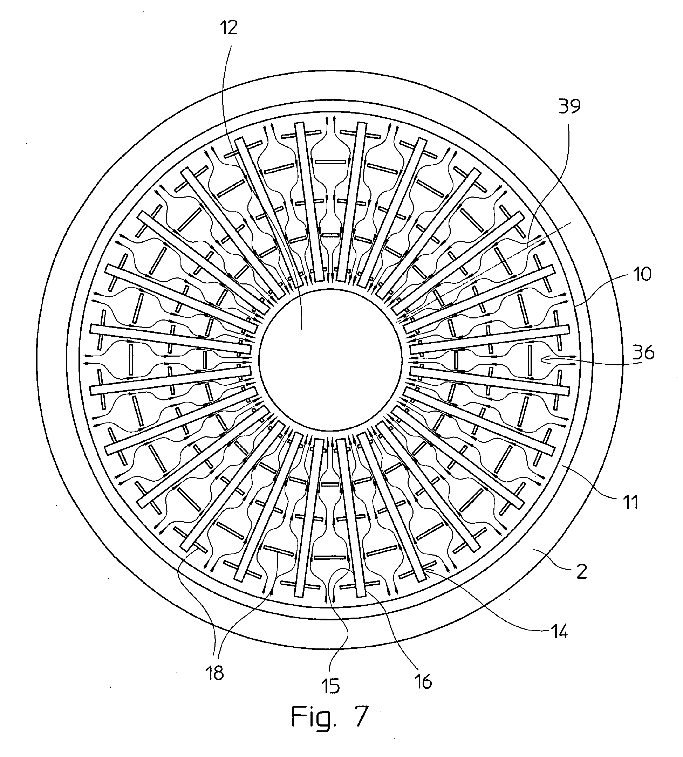

According to a further embodiment of the present invention shown in figures 6 and 7, fins 18 or some of fins 18 are arranged in the reaction zone 36 defined between adjacent exchangers 14 at said centre line zone 39. Preferably, such fins 18 arranged in the centre line zone 39 between adjacent exchangers 14, are arranged substantially perpendicular relative to the reacting gas inlet direction into catalytic bed 10.

Fins 18 arranged in the centre line zone 39 are preferably supported to walls 15 or 16 of a respective exchanger 14 through special spacers, per se conventional and therefore not shown. In particular, such spacers are preferably fixed, on one side, to the opposite ends of a long side 18a or 18b of said fins 18 and, on the other side, to the short sides 14b, 14c of the respective heat exchanger 14.

As regards the further features of the reactor according to this embodiment of the invention, reference shall be made to what described hereinbefore in relation to figures 2-5 and in particular to the example of figures 4-5.

Figures 8 and 9 show a detail of a pseudo-isothermal reactor operating according to the prior art and a detail of the reactor of figure 1 operating according to the invention.

In such figures, details equivalent to each other and/or equivalent to the details of the reactor of figure 1 are indicated with the same reference numerals.

Reference numerals 16a, 15a instead indicate the external surface or catalyst-side surface of wall 16, respectively 15, of the adjacent heat exchangers 14, located inside the catalytic bed 10.

In operation, the thermal exchange operating fluid crosses a zone 37, inside heat exchangers 14, while the reacting gas and product mixture flows in the above reaction zone 36 of the catalytic bed 10 defined by adjacent heat exchangers 14.

The temperature distribution profile is represented in both figures 8 and 9 by lines 33 and 34. Line 34 relates to the temperature distribution in zone 37, inside exchangers 14, whereas line 33 related to the temperature distribution in zone 36 inside the catalytic bed 10. In general, the temperature profile inside a respective pseudo-isothermal reactor is that resulting from the combination of lines 33 and 34.

In the prior art reactors (figure 8), it is easy to note that lines 34 are very flat, almost rectilinear and perpendicular to wall 30 of heat exchangers 14. This is determined by a high thermal exchange coefficient (as high as possible) inside said heat exchangers.

On the other hand, still in the prior art reactors (figure 8), line 33 relating to the temperature distribution in zone 36 of the catalytic bed 10 exhibits a considerable hogging. This is caused by the different (lower) thermal exchange coefficient present in catalytic bed 10 as compared to the (higher) thermal exchange coefficient inside exchangers 14, which causes a large temperature difference (lack of homogeneity) between the wall temperature (surface 16a, 15a) of exchangers 14 and the temperature of the mixture flowing in the reaction zone 36.

In other words, temperature varies between zones 36 and 37, from a minimum value Tmin, corresponding to the centre of zone 37 inside heat exchangers 14 and a maximum value Tmax (equivalent to the limit temperature T₁ described hereinbefore), corresponding to the centre of zone 36 of catalytic bed 10 (that is, in the median point between two adjacent heat exchangers).

Therefore there is a temperature gradient ΔTₜₒₜ between the two zones 36 and 37 that, as can be seen in figure 8, is mainly located in zone 36, creating a high lack of temperature homogeneity in the catalytic bed 10, with consequent loss of reaction efficiency and thus reduction of the conversion yield, for the reasons described hereinafter.

The portion of the temperature gradient ΔTₜₒₜ located in zone 36 is represented by the reference sign ΔT, which indicates the temperature difference, described hereinbefore, between the limit temperature T₁ (corresponding to Tₘₐₓ) and the temperature at the external surface 16a, 15a of exchangers 14.

Within the temperature difference (or gradient) ΔT, in the reaction zone 36, a temperature interval is found where the reaction takes place in efficiency, and thus optimum yield conditions (pseudo-isothermicity conditions). Such temperature interval is comprised between temperature Tₘₐₓ (=T₁) and a temperature T₀, below which the reaction does not take place or in any case takes place in ineffective conditions.

From figure 8 it is clear that in a considerable portion of zone 36 of catalytic bed 10, identified with reference numeral 35, the reaction temperature is below the optimum values to the disadvantage of the efficiency and overall conversion yield of the reactor.

Thanks to the present invention, using baffle means (fins 18) for the flow of reacting gases towards heat exchangers 14, a better temperature profile is obtained in zone 36 of the catalytic bed between adjacent exchangers 14, thus allowing the temperature increase in zone 35 (close to exchangers 14) to a value equal to or higher than T₀ (minimum temperature for the reaction to take place), despite the (low) thermal exchange coefficient of catalytic bed 10.

In this way, as shown in figure 9, a decrease of the temperature gradient ΔT between the limit temperature T₁ (corresponding to Tₘₐₓ) and the temperature at the external surface 16a, 15a of exchangers 14 is obtained in zone 36.

The temperature profile (line 33) in said zone 36 therefore exhibits a very small concavity and, as indicated in figure 9, it is all comprised within the interval (Tmax-T₀) where the reaction takes place in optimum efficiency (and therefore yield) conditions (pseudo-isothermicity conditions).

For this reason, in the entire zone 36 of catalytic bed 10 it is possible to carry out the reaction in an effective manner to the advantage of the overall reaction efficiency.

At the same time it can be seen that the temperature profile in zone 37 inside exchangers 14 is substantially unchanged thus allowing a high thermal exchange efficiency to be obtained between exchangers 14 and catalytic bed 10.

The reactor according to the present invention can further allow the use of a lower number of heat exchangers, dimensions of the catalytic bed being equal, as compared to a reactor according to the prior art, while maintaining a suitable homogeneity of temperatures inside the catalytic bed, to the advantage of greater simplicity and inexpensiveness of construction and operation of the reactor according to the invention.

The invention thus conceived is subject to further variations and changes, all falling within the capacity of a man skilled in the art and as such, falling within the scope of protection of the invention itself, as defined by the following claims.

## Claims

1. Isothermal reactor (1) comprising a substantially cylindrical shell (2), at least one catalytic bed (10) supported in said shell (2) intended for being crossed by a flow of reacting gases and a thermal exchange unit (13) comprising a plurality of heat exchangers (14), **characterized in that** it comprises baffle means in at least one reaction zone (36) of said catalytic bed (10) between adjacent heat exchangers (14) for deviating said flow of reacting gases crossing said catalytic bed (10) towards said adjacent heat exchangers (14).

2. Isothermal reactor (1) according to claim 1, **characterized in that** said heat exchangers (14) have a substantially box-shaped structure, with essentially elongated rectangular and flat shape with opposite long sides (14a) parallel to an axis (X) of the shell (2) and opposite short sides (14b, 14c) arranged perpendicular to said axis (X), said exchangers (14) further comprising an internal chamber intended for being crossed by a thermal exchange operating fluid.

3. Isothermal reactor (1) according to claim 2, **characterized in that** said exchangers (14) are grouped in a cylindrical arrangement coaxial to the shell (2) wherein said exchangers are arranged according to a radial arrangement.

4. Isothermal reactor (1) according to any one of the previous claims, **characterized in that** said baffle means consists in a plurality of fins (18) having plate-like structure and essentially rectangular shape.

5. Isothermal reactor according to claim 4, **characterized in that** said fins (18) are supported by said exchangers (14) at a long side (18a) of said fins (18) and extend from said exchangers (14) substantially up to a centre line zone (39) between said adjacent heat exchangers (14).

6. Isothermal reactor according to claim 4, **characterized in that** said fins (18) extend parallel to said axis (X) of the shell (2) substantially along the entire axial length of the respective heat exchangers (14).

7. Reactor according to claim 5, **characterized in that** each heat exchanger (14) supports on both opposite walls thereof (15, 16) a plurality of fins (18) in predetermined spaced relation between each other and **in that**, in each reaction zone (36) defined between adjacent heat exchangers (14), the fins (18) of an exchanger (14) alternate with the fins (18) of the other adjacent exchanger (14) so as to create along said reaction zone (36) defined between said adjacent exchangers (14) a substantially zigzag crossing path by the flow of reacting gases directed towards said adjacent heat exchangers (14).

8. Isothermal reactor according to any one of claims 4 to 7, **characterized in that** said fins (18) are arranged inclined relative to the walls (15, 16) of the respective heat exchangers (14).

9. Isothermal reactor according to any one of claims 4 to 7, **characterized in that** said fins (18) are arranged substantially perpendicular to the walls (15, 16) of the respective heat exchangers (14).

10. Isothermal reactor according to claim 4, **characterized in that** said fins (18) or some of said fins (18) are arranged in the reaction zone (36) defined between adjacent heat exchangers (14), at a centre line zone (39).

11. Isothermal reactor according to claim 10, **characterized in that** said fins (18) arranged at the centre line zone (39) between adjacent heat exchangers (14), are arranged substantially perpendicular relative to an inlet direction of the reacting gases into the catalytic bed (10).

12. Isothermal reactor (1) according to claim 1, **characterized in that** said catalytic bed (10) is provided with holes for allowing an inlet of the reacting gases into said catalytic bed (10) with radial motion.

13. Thermal exchange unit (13) for an isothermal reactor (1) comprising a plurality of heat exchangers (14) defining a plurality of reaction zones (36) thereinbetween intended for being crossed by a flow of reacting gases, **characterized in that** it comprises baffle means in at least one reaction zone (36) between said adjacent heat exchangers (14) for deviating said flow of reacting gases towards said adjacent heat exchangers (14).
